# EUROPÄISCHE PATENTSCHRIFT

(11) **EP 1 451 833 B1**
(45) Veröffentlichungstag und Bekanntmachung des Hinweises auf die Patenterteilung: **14.11.2007**
(21) Anmeldenummer: 02791600.6
(22) Anmeldetag: 02.12.2002
(51) Int. Cl.: H01C 7/04

(54) **ELEKTRISCHES BAUELEMENT MIT EINEM NEGATIVEN TEMPERATURKOEFFIZIENTEN**
ELECTRICAL COMPONENT WITH A NEGATIVE TEMPERATURE COEFFICIENT
COMPOSANT ELECTRIQUE A COEFFICIENT DE TEMPERATURE NEGATIF

(30) Priorität: 04.12.2001 DE 10159451
(43) Veröffentlichungstag der Anmeldung: 01.09.2004
(73) Patentinhaber: EPCOS AG, 81669 München (DE)
(72) Erfinder: FEICHTINGER, Thomas, A-8010 Graz (AT); HESSE, Christian, A-8535 Deutschlandsberg (AT); KRUMPHALS, Robert, A-8530 Deutschlandsberg (AT); PECINA, Axel, A-8530 Deutschlandsberg (AT); WISCHNAT, Volker, A-8523 Frauental (AT)
(74) Vertreter: Epping - Hermann - Fischer
(86) Internationale Anmeldenummer: PCT/DE2002/004409
(87) Internationale Veröffentlichungsnummer: WO 2003/049126

(56) Entgegenhaltungen:
- DE-C- 4 213 629
- DE-C- 19 740 262
- DE-U- 29 914 625
- US-A- 5 245 309
- US-A- 5 661 094
- PATENT ABSTRACTS OF JAPAN vol. 2002, no. 04, 4. August 2002 (2002-08-04) & JP 2001 338805 A (RETORON CO LTD), 7. Dezember 2001 (2001-12-07)
- PATENT ABSTRACTS OF JAPAN vol. 016, no. 429 (E-1261), 8. September 1992 (1992-09-08) & JP 04 150001 A (MURATA MFG CO LTD), 22. Mai 1992 (1992-05-22)
- PATENT ABSTRACTS OF JAPAN vol. 1996, no. 06, 28. Juni 1996 (1996-06-28) & JP 08 051004 A (TAIYO YUDEN CO LTD), 20. Februar 1996 (1996-02-20)

## Beschreibung

Es sind elektrokeramische Bauelemente bekannt, bei denen der spezifische Widerstand des keramischen Grundkörpers einen negativen Temperaturkoeffizienten aufweist und die demzufolge als NTC-Widerstände verwendet werden können. Diese Keramiken weisen bei zunehmenden Temperaturen abnehmende elektrische Widerstände auf. Die Widerstandswerte von NTC-Materialien zeigen in guter Näherung eine exponentielle Abhängigkeit, wobei die Empfindlichkeit der Widerstandsänderung in Abhängigkeit von der Temperatur den B-Wert angibt. Je größer dieser B-Wert ist, umso größer ist die Temperaturempfindlichkeit des spezifischen Widerstandes der Keramik.

Herkömmliche NTC-keramische Bauelemente bestehen aus einem Keramikgrundkörper, auf dem zwei Kontaktschichten aufgebracht wurden. Da für diese keramischen Bauelemente Normen vorgeschrieben sind, die die Größe dieser Bauelemente vorgeben, läßt sich mit einem Bauteil einer vorgegebenen Norm jeweils nur ein Widerstandswert, mit einem bestimmten Widerstandstemperaturkennlinienverlauf (B-Wert) und einer bestimmten Kapazität verwirklichen. Auf diesen Bauteilen kann zusätzlich eine Passivierungsschicht aufgebracht sein, die das Bauteil vor äußeren Einflüssen, zum Beispiel vor einer Widerstandsänderung beim Löten des Bauteils, schützen.

JP 0805 1004 A berchreibt einen Thermistorchip, der mehrere Schichten aus einem NTC Thermistormaterial und versetzt angeordnete Elektrodenschichten aufweist.

In der US-Patentschrift US 5,245,309 sind keramische NTC-Bauelemente offenbart, bei denen der keramische Grundkörper in Vielschichttechnologie gefertigt ist und aus keramischen Schichten mit darin angeordneten Innenelektroden besteht. Diese Innenelektroden kontaktieren jeweils eine äußere Kontaktschicht und bilden ein Elektrodenterminal. Weiterhin kann eine äußere Passivierungsschicht, zum Beispiel Glas auf der Oberfläche des Bauelements aufgebracht sein. Mit dieser Technologie ist es möglich, durch Variation der Anordnung der Innenelektroden bei Bauteilen mit gleicher Bauteilnorm unterschiedliche Widerstände zu realisieren. Die für die NTC-Materialien ebenfalls wichtige elektrische Eigenschaft, der B-Wert, ist jedoch dadurch nicht veränderbar.

Die Druckschrift DE 299 14 625 U1 offenbart ein Heißleiter - Bauelement, das wenigstens zwei verschiedene Keramikteile aufweist, die unterschiedliche spezifische Widerstandswerte und/oder ein unterschiedliches Temperaturverhaltes haben.

Für den Einsatz der NTC-Bauelemente für spezifische Aufgaben, zum Beispiel der Temperaturkontrolle in Mobiltelefonen, werden allerdings keramische Bauelemente gesucht, die an das jeweilige Aufgabengebiet angepaßte elektrische Eigenschaften, insbesondere eine angepaßte Kapazität einen angepaßten Widerstands/Temperatur-Kennlinienverlauf (B-Wert) sowie angepaßte Widerstände bei einer gegebenen Temperatur aufweisen. Da häufig strikte Bauteilnormen einzuhalten sind, sind Bauteile gefragt, die, bei gleichen Abmessungen der elektrokeramischen Grundkörper und gleichen Abmessungen ihrer Kontaktschichten, unterschiedliche elektrische Eigenschaften aufweisen. Mit den herkömmlichen NTC-Bauelementen läßt sich dabei wie bereits geschildert vor allen Dingen der B-Wert und der Widerstandswert nicht gleichzeitig beliebig variieren.

Ziel der vorliegenden Erfindung ist es daher, ein elektrokeramisches NTC-Bauelement anzugeben, bei dem die B-Werte und Widerstandswerte über einen weiten Bereich variiert werden können.

Dieses Ziel wird erfindungsgemäß durch ein NTC-Bauelement nach Anspruch 1 erreicht. Vorteilhafte Ausgestaltungen des Bauelements sind Gegenstand von Unteransprüchen.

Die Erfindung beschreibt einen Grundkörper, der zumindest einen ersten und einen zweiten räumlich ausgeformten keramischen Teilbereich aus unterschiedlichen Materialien umfaßt. Bei diesen Materialien handelt es sich jeweils um Keramiken, die einen Widerstand mit einem negativen Temperaturkoeffizienten aufweisen, also Heißleiter sind. Auf der Oberfläche des Grundkörpers ist wenigstens eine erste und eine zweite Kontaktschicht vorgesehen. Diese Kontaktschicht ermöglicht z.B. das Löten des Bauteils in eine Schaltungsanordnung (SMD-Fähigkeit). Dabei sind im Grundkörper mehrere mit Abstand angeordnete elektrisch leitende Elektrodenschichten vorhanden, die jeweils mit einer der Kontaktschichten elektrisch leitend verbunden sind, so daß zwei Elektrodenstapel gebildet werden, die jeweils eine Kontaktschicht kontaktieren. Die elektrisch leitenden Elektrodenschichten sind dabei häufig in Form von parallelen Elektrodenbündeln im keramischen Grundkörper angeordnet. Der Vorteil dieses Bauelements besteht darin, daß durch Variation der Anordnung der elektrisch leitenden Elektrodenschichten, also beispielsweise durch die Abstände der Elektrodenschichten zueinander der elektrische Widerstand des Bauelements besonders einfach eingestellt werden kann. Der erste und zweite keramische Teilbereich sind zwischen den Kontaktschichten angeordnet, so daß beide keramischen Teilbereiche die elektrischen Eigenschaften des Bauelements zusammen mit den im Grundkörper angeordneten Elektrodenschich-en bestimmen.

Dabei können die wichtigen elektrischen Eigenschaften des NTC-Bauelements wie der B-Wert, der Widerstand bei einer bestimmten Temperatur, sowie die Dielektrizitätskonstante des Grundkörpers, die dann die Kapazität des fertigen Bauelements bestimmt, durch geeignete Kombination von zwei räumlich ausgeformten NTC-Teilbereichen, die unterschiedliche elektrische Eigenschaften aufweisen und Variation der Geometrie der Elektrodenschichten, eingestellt werden.

Der Vorteil des erfindungsgemäßen elektrischen Bauelements besteht darin, daß unter Einhaltung der Bauteilnormen, also bei gleichen Abmessungen des keramischen Grundkörpers NTC-Bauelemente mit unterschiedlichen elektrischen Eigenschaften sehr leicht realisiert werden können, ohne daß durch zeit- und kostenintensive Forschung neue NTC-Keramiken entwickelt werden müßten. Als Keramikmaterialien für den ersten und zweiten keramischen Teilbereich des Grundkörpers kommen also NTC-Keramiken mit unterschiedlichen Dielektrizitätskonstanten, unterschiedlichen elektrischen Widerstands/Temperatur-Kennlinienverläufen und damit unterschiedlichen B-Werten und NTC-Materialien, die bei einer gegebenen Temperatur unterschiedliche elektrische Widerstände aufweisen, in Frage. Durch Kombination dieser herkömmlichen NTC-Keramiken und Variation der Geometrie der Elektrodenschichten im Inneren des keramischen Grundkörpers lassen sich also NTC-Bauelemente mit elektrischen Eigenschaften verwirklichen, die im Vergleich zu den elektrischen Eigenschaften der einzelnen Keramiken verändert sind.

Räumlich ausgeformte keramische Teilbereiche im Sinne dieser Erfindung sind dabei Teilbereiche, die im Grundkörper eine klar festellbare räumliche Ausdehnung aufweisen, wobei der erste und zweite Teilbereich, die jeweils aus unterschiedlichen Materialien bestehen, klar voneinander unterscheidbar sind.

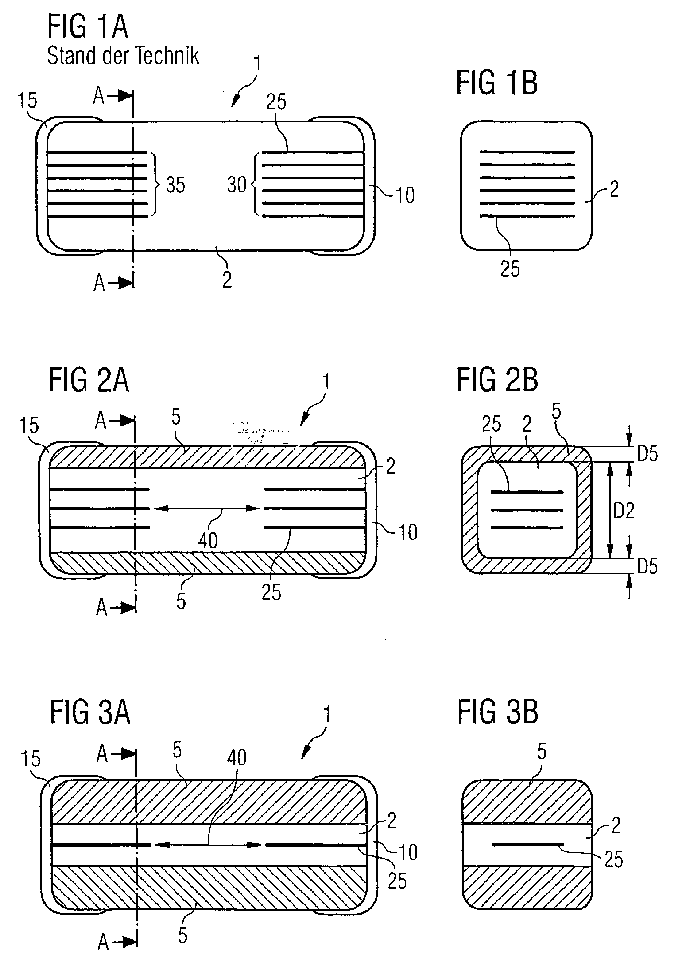

Es sind auch bei gleichbleibenden Außenmaßen des erfindungsgemäßen Bauelements eine Vielzahl von räumlichen Ausgestaltungsmöglichkeiten möglich. So ist es möglich, daß der zweite keramische Teilbereich auf den Oberflächen des ersten Teilbereichs angeordnet ist, so daß beispielsweise der erste keramische Teilbereich 2 in Form eines Quaders vorliegt, auf dessen Oberflächen der zweite keramische Teilbereich 5 schichtförmig angeordnet ist (siehe auch Fig. 2A und 2B).

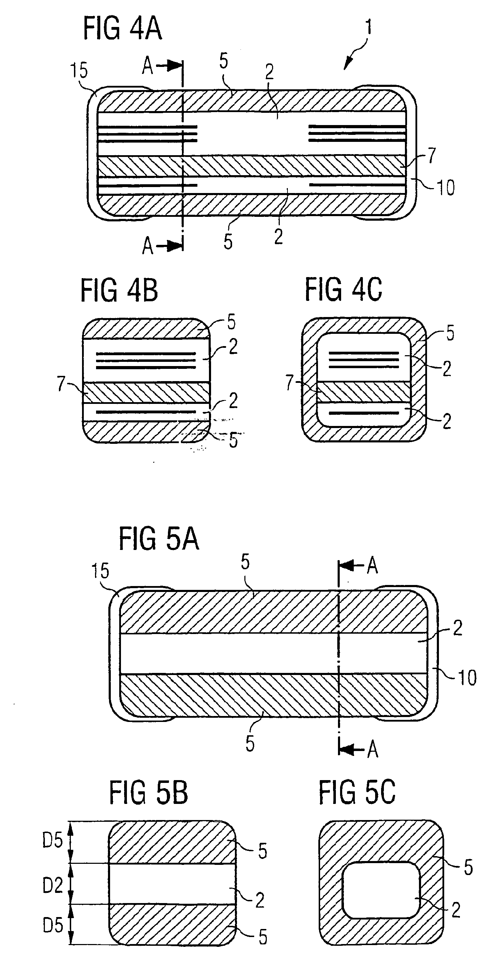

Weiterhin ist es möglich, daß ein Schichtstapel aus drei und mehr schichtförmig ausgebildeten Teilbereichen in beliebiger Abfolge gebildet ist, bei dem beispielsweise zwei erste Teilbereiche vorhanden sind, zwischen denen formschlüssig ein dritter Teilbereich angeordnet ist, wobei die oberste und unterste Schicht des Schichtstapels aus einem zweiten Teilbereich bestehen. (siehe auch Fig. 4A und 4B). Auf allen Oberflächen dieses Schichtstapels, die größtenteils frei von den Kontaktflächen sind, kann dann auch beispielsweise ein ggf. weiterer erster oder zweiter keramischer Teilbereich angeordnet sein (Fig. 4C).

Als weitere Variante ist es möglich, den ersten und zweiten Teilbereich als Schichten auszuformen. In diesem Fall wird der Grundkörper des erfindungsgemäßen Bauelements durch einen Schichtstapel aus diesen Schichten definiert (siehe z. B. Fig. 3A und B). Dabei ist es möglich, Schichtstapel aufzubauen, die aus alternierenden ersten und zweiten keramischen Teilbereichen bestehen, oder z.B. auch Schichtstapel aus mehreren übereinander angeordneten ersten Keramikschichten zu bilden zwischen denen jeweils nur eine oder wenige Schichten des zweiten Teilbereichs angeordnet sind.

Der Vorteil dieser oben geschilderten räumlichen Ausgestaltungsmöglichkeiten des erfindungsgemäßen Bauelements besteht darin, daß durch die verschiedenartigen Gestaltungsmöglichkeiten der Geometrie des aktiven Grundkörpers des Bauelements eine weitere Veränderung und Anpassung der elektrischen Eigenschaften des Bauelements möglich wird. Die elektrischen Eigenschaften des gesamten Bauelements werden also nicht nur durch die jeweiligen Anteile der verwendeten unterschiedlichen Keramikteilbereiche und ihrer jeweiligen elektrischen Eigenschaften bestimmt, sondern auch durch die relative Anordnung dieser Keramikbereiche zueinander im Grundkörper und deren Anordnung im bezug auf die Kontaktschichten.

Weiterhin ist es bei einem Grundkörper, der einen alternierenden Schichtstapel von wenigstens einem ersten und einem zweiten keramischen Teilbereich umfaßt, möglich, daß die Kontaktschichten auf zwei sich gegenüberliegenden Flächen des Grundkörpers angeordnet sind.

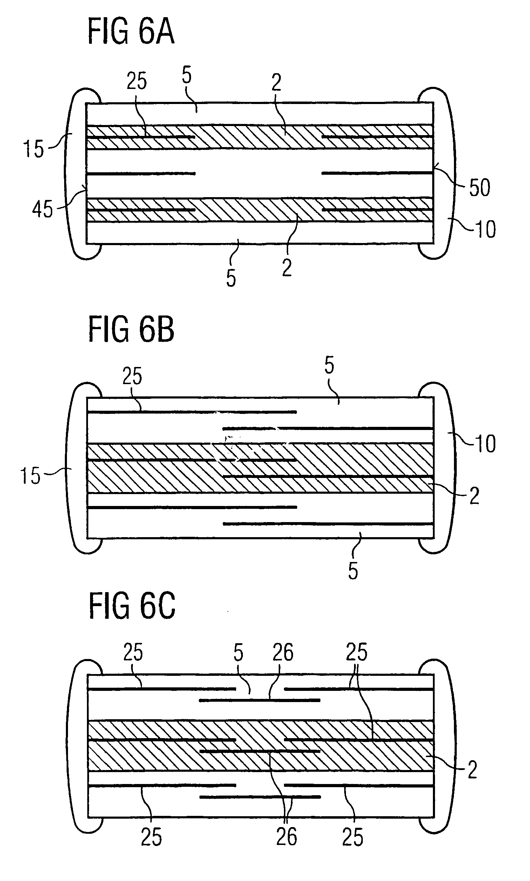

In diesem Fall können dann in einer weiteren Variante des erfindungsgemäßen Bauelements die Kontaktschichten auf den Oberflächen des Grundkörpers angeordnet sein, die von den Stirnflächen der Teilbereiche gebildet werden. In diesem Fall können alle auf einer Seite des Schichtstapels stehenden Stirnflächen der Keramikschichten die Fläche bilden, auf der eine Kontaktschicht angeordnet ist (siehe Fig. 6).

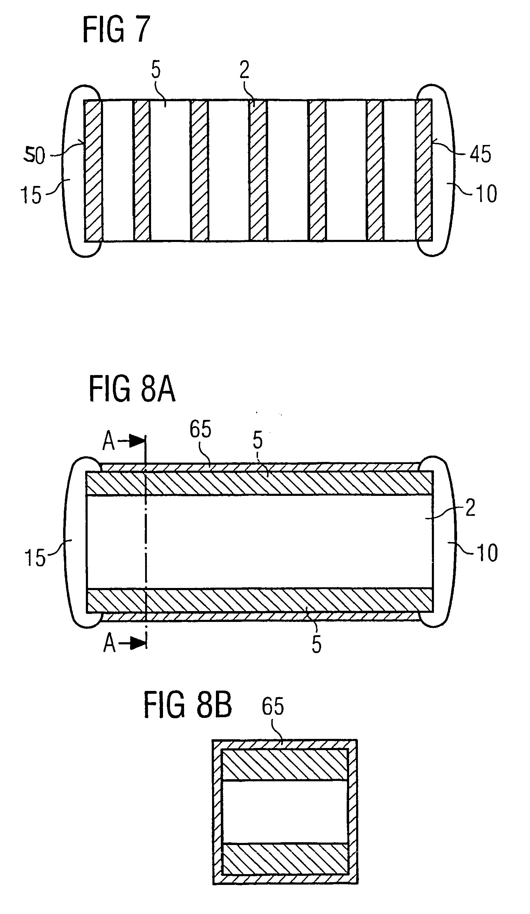

In einer anderen Ausgestaltung ist es möglich, daß wie oben erwähnt ein Schichtstapel aus dem ersten und dem zweiten keramischen Teilbereich gebildet wird, wobei die Kontaktflächen dann auf der obersten und der untersten Schicht des Schichtstapels angeordnet werden (siehe Fig. 7). Jede Kontaktfläche befindet sich dann also auf jeweils einer Hauptoberfläche eines schichtförmigrn Teilbereichs.

Im Falle von Grundkörpern, die Schichtstapel aus alternierenden ersten und zweiten keramischen Teilbereichen umfassen, werden die Elektrodenschichten vor allen parallel zu den alternierenden Schichten der beiden Teilbereiche angeordnet (siehe Fig. 6). Dabei können die Elektrodenschichten in einem der beiden Schichtbereiche, oder in allen beiden angeordnet sein, was vorteilhafterweise eine weitere Veränderung der elektrischen Eigenschaften des Bauelements bewirken kann.

Als Keramikmaterial für den ersten oder zweiten keramischen Teilbereich kommen eine Reihe von Nickel-Mangan-Spinellen in Betracht. Dabei kann zur Reduzierung des spezifischen Widerstands des Spinells ein Teil der dreiwertigen Manganionen gegen dreiwertige Ionen A^{III} ausgetauscht werden, die aus Eisen, Titan, Aluminium oder Zirkon ausgewählt sind, oder mit zweiwertigen Metallen A^{II} ersetzt werden, die Kobalt, Zink, Eisen, Calcium, Magnesium, Zirkon oder Kupfer sind oder mit einem einwertigen Metall A^{I}, das Lithium ist. Um einen Ladungsausgleich zu erreichen, müssen daher je nach Wertigkeit des Metalls unterschiedliche Stöchiometrien beachtet werden. Ein dotierter Nickel-Mangan-Spinell gehorcht beispielsweise der folgenden allgemeinen Formel:

(A^{III}_{z},A^{II}_{(3/2)z},A^{I}_{3z})[Ni^{II}Mn^{III}_{2-z}]O₄,

wobei gilt, 0,01 ≥ z ≤ 0,6.

Weiterhin kann ein Nickel-Mangan-Spinell verwendet werden, bei dem zweiwertiges Nickel gegen zweiwertiges Mangan ersetzt wird, um die Leitfähigkeit des Spinells zu erhöhen. In diesem Fall kann der Spinell die folgende Formel aufweisen:

Ni^{II}_{1-z}[Mn^{III}₂Mn^{II}_{z}]O4,

wobei gilt, 0 ≤ z ≤ 0,4.

Darüber hinaus kann ein Mangan-Spinell verwendet werden, bei dem zweiwertiges Mangan gegen die oben genannten drei-, zwei- oder einwertigen Metalle A^{III}, A^{II}, A^{I} ersetzt werden kann. Ein solcher Spinell gehorcht dann der folgenden allgemeinen Formel:

(A^{III}_{(2/3)z},A^{II}_{z},A^{I}_{2z})[Mn^{III}₂Mn^{II}_{1-z}]O₄,

wobei gilt: 0,01 ≤ z ≤ 0,6.

Bei den genannten Spinellen können die Metalle Kobalt, Zink, Eisen, Lithium oder Kupfer zusammen zwischen 0 bis 60 Gew.-% des Spinells ausmachen. Weiterhin können auch andere Metalle zur Dotierung des Spinells verwendet werden, beispielsweise Titan, Aluminium, Kalzium, Zirkon oder Magnesium. Diese Metalle machen in der Regel einen Anteil zwischen 0 bis 10 Gew.-% des Gesamtspinells aus.

Neben dem Nickel-Mangan-Spinell kann auch noch ein Zink-Mangan-Spinell ZnMn₂O₄ als Keramikmaterial für einen keramischen Teilbereich eingesetzt werden.

Weiterhin ist es möglich, daß zumindest eines der beiden Keramikmaterialien eine Perovskitkeramik mit der folgenden allgemeinen Formel umfaßt:

ABO₃

bei der das Metall A entweder ein Element der seltenen Erden, Strontium oder Barium ist und das Metall B Magnesium, Titan, Vanadium, Chrom, Aluminium, Mangan, Eisen, Cobalt oder Nickel ist.

Der Vorteil dieser Perovskitverbindung besteht darin, daß sie gegenüber sauren Galvanikbädern stabil ist, die zum Aufbringen der elektrisch leitenden Kontaktschichten eingesetzt werden können, so daß keine weiteren Vorsichtsmaßnahmen beim Galvanisieren nötig sind, wenn diese Perovskitkeramik das Material für denjenigen keramischen Teilbereich ist, der auf der Oberfläche des Grundkörpers angeordnet ist.

Gegenstand der Erfindung ist weiterhin ein NTC-Bauelement, bei dem auf zumindest zwei sich gegenüberliegenden Oberflächen des Grundkörpers, die zum größten Teil frei von den beiden Kontaktschichten sind, eine Schutzschicht angeordnet ist. Dabei kann die Schutzschicht auf zwei sich gegenüberliegenden Oberflächen oder auf allen vier Oberflächen angeordnet sein, auf denen weitgehend keine Kontaktflächen vorhanden sind. Diese Schutzschicht ist vorteilhafterweise ein Material mit einem hohen spezifischen elektrischen Widerstand von > 10⁶ Ωcm. Diese Schutzschicht verhindert besonders vorteilhafterweise Umwelteinflüsse, die sich auf die elektrischen Eigenschaften des NTC-Bauelements auswirken können. So kann beispielsweise eine Veränderung der elektrischen Eigenschaften des Bauelements während des Lötens an den Kontaktflächen verhindert werden. Weiterhin kann diese Schutzschicht das Bauelement besonders vorteilhaft vor den sauren Galvanikbädern schützen, die normalerweise zum Aufbringen der Kontaktschichten eingesetzt werden. Als Schutzschicht kommen vor allen Dingen Glas, Keramiken, Silazane, bei denen es sich um hochmolekulare Siliziumstickstoffverbindungen handelt oder Kunststoffe, beispielsweise Parylene in Betracht. Bei den Parylenen handelt es sich um thermoplastische Polymere mit über Ethylenbrücken in 1,4 Positionen verknüpften Phenylenresten.

Im folgenden soll das erfindungsgemäße Bauelement anhand von Figuren und Ausführungsbeispielen noch näher erläutert werden.
- Die Figuren 1A und 1B: zeigen ein NTC-Bauelement nach dem Stand der Technik.
- Die Figuren 2A und 2B: zeigen eine Ausführungsform des erfindungsgemäßen Bauelements mit elektrisch leitenden Elektrodenschichten im Inneren des Grundkörpers.
- Die Figuren 3A und 3B: zeigen ein weiteres Bauelement mit nur jeweils einer Elektrodenschicht pro Kontaktfläche.
- Die Figuren 4A bis 4C: zeigen eine Ausführungsform mit drei verschiedenen Keramikteilbereichen.
- Die Figuren 5A bis 5C: zeigen ein Bauelement ohne Innenelektroden.
- Die Figuren 6A bis 6C: zeigen Ausführungsformen des erfindungsgemäßen Bauelements mit Innenelektroden.
- Die Figur 7: zeigt eine alternative Ausführungsform des Bauelements mit einem Grundkörper aus einem alternierenden Schichtstapel.
- Die Figuren 8A und 8B: zeigen ein erfindungsgemäßes Bauelement mit einer Schutzschicht.

Die Figur 1A zeigt ein herkömmliches NTC-Bauelement im Längsschnitt, wobei der Grundkörper 1 nur aus einem einzigen Keramikbereich 2 mit einem Keramikmaterial besteht. Im Inneren des Bauelements können elektrisch leitende Elektrodenschichten 25 angeordnet sein, wobei jeweils eine Elektrodenschicht mit einer Kontaktschicht 10 oder 15 elektrisch leitend verbunden ist, so daß die Elektrodenbündel 30, 35 gebildet werden. In Figur 1B ist der Querschnitt durch den in Figur 1A mit A bezeichneten Schnitt gezeigt. Zu sehen ist der keramische Bereich 2 sowie die elektrisch leitenden Elektrodenschichten 25.

In Figur 2A ist der Längsschnitt durch eine Variante eines erfindungsgemäßen NTC-Bauelements zu sehen. In diesem Fall besteht der Grundkörper 1 aus zwei keramischen Teilbereichen 2 und 5. Der zweite Keramikteilbereich 5 ist dabei auf den Oberflächen des ersten Teilbereichs 2 angeordnet. Im ersten Keramikbereich 2 sind Elektrodenschichten 25 angeordnet, die jeweils wieder die oben genannten Elektrodenbündel bilden, wobei zwischen beiden Elektrodenbündeln der Bereich 40 vorhanden ist. Figur 2B zeigt den Schichtstapel im Querschnitt. D2 bezeichnet die Dicke des ersten keramischen Teilbereichs und D5 die Dicke des zweiten keramischen Teilbereichs im Querschnitt.

In Figur 3A ist ein weiteres Bauelement im Längsschnitt dargestellt, wobei in diesem Fall der Grundkörper 1 aus einer alternierenden Schichtfolge aus ersten Teilbereich 2 und zweitem Teilbereich 5 besteht, wobei die oberste und unterste Schicht aus dem zweiten Teilbereich bestehen. Im ersten Keramikmaterial 2 sind zwei Elektrodenschichten 25 angeordnet, die jeweils mit einer Kontaktschicht 10 oder 15 elektrisch leitend verbunden sind. In Figur 3B ist der Querschnitt durch den in Figur 3A mit A bezeichneten Schnitt zu sehen. Deutlich ist dabei die Abfolge des Schichtstapels zu erkennen.

In Figur 4A ist der Längsschnitt durch ein erfindungsgemäßes Bauelement gezeigt, bei dem der Grundkörper 1 aus drei ggf. unterschiedlichen Keramikteilbereichen 2, 5 und 7 besteht. Zu sehen ist, daß in diesem Fall nur im Keramikteilbereich 2 Elektrodenschichten angeordnet sind. Der Grundkörper kann dabei in zwei alternativen Ausführungsformen aufgebaut sein, wie die Querschnitte in Figur 4B und 4C zeigen. In Figur 4B ist der Querschnitt des Grundkörpers zu sehen, wobei dieser Grundkörper als ein Stapel von Schichten realisiert wird, in dem zwei erste Keramikteilbereiche 2 vorhanden sind, die miteinander durch einen dazwischen formschlüssig angeordneten dritten Keramikteilbereich 7 verbunden sind. Die erste und letzte Schicht dieses Schichtstapels besteht dabei aus dem zweiten Keramikteilbereich 5. Möglich ist es auch, bei der Herstellung des Bauelements, den ersten Keramikteilbereich 2 in diesem Fall als kompakten Keramikkörper einzusetzen, auf dem dann die zweiten und dritten Keramikteilbereiche 5 und 7 als Schichten aufgebracht werden. Somit ist es möglich, diese erfindungsgemäße Variante des Bauelements mittels Vielschichttechnologie durch Stapeln von Keramikfolien zu realisieren oder durch Aufbringen von Keramikfolien auf einen bereits vorhandenen kompakten Keramikgrundkörper. Alternativ besteht die Möglichkeit, auf allen Oberflächen des durch den ersten und dritten Teilbereich 2,7 aufgebauten Schichtstapels den zweiten Keramikteilbereich 5 anzuordnen, so daß ein Querschnitt resultiert, wie in Figur 4C zu sehen ist.

In Figur 5A ist ein Längsschnitt durch ein Bauelement zu sehen, wobei anders als in Figur 2A keine elektrisch leitenden Elektrodenschichten 25 im Inneren vorhanden sind. Wie in den Querschnitten in Figur 5B und 5C zu sehen, kann auch dieses Bauelement im Querschnitt wieder unterschiedlich aufgebaut sein. In Figur 5B bezeichnen D2 die Dikke des ersten keramischen Teilbereichs und D5 die Dicke der zweiten keramischen Teilbereiche.

In Figur 6A ist ein erfindungsgemäßes Bauelement zu sehen, dessen Grundkörper aus einem alternierenden Schichtstapel aus einem ersten Keramikteilbereich 2 und einem zweiten Keramikteilbereich 5 besteht. Im zweiten Keramikteilbereich können dabei parallel zu den Schichten elektrisch leitende Elektrodenschichten 25 angeordnet sein. In diesem Fall kontaktieren die Kontaktflächen jeweils eine Stirnseite jedes keramischen Schichtbereichs.

In Figur 6B ist ein Bauelement zu sehen in dessen ersten und zweiten Keramikteilbereichen 2,5 kammartig ineinander verschobene Elektrodenschichten 25 angeordnet sind, die alternierend jeweils einer der Kontaktschichten kontaktieren. Mit dieser Anordnung lassen sich Bauelemente mit besonders niedrigen spezifischen Widerständen realisieren.

In Figur 6C ist eine weitere Ausführungsform gezeigt, bei der im ersten und im zweiten Keramikteilbereich 2,5 Elektrodenschichten 25 angeordnet sind, wobei die zwei Kontaktschichten auf den sich gegenüberliegenden Stirnflächen des Grundkörpers angeordnet sind. Dabei stehen sich jeweils zwei Elektrodenschichten gegenüber, die mit jeweils einer der Kontaktschichten verbunden sind. Eine weitere Elektrodenschicht 26, die keine der Kontaktschichten kontaktiert, ist parallel zu diesen beiden erstgenannten Elektrodenschichten im Grundkörper angeordnet. Mit Hilfe dieser Anordnung von Elektrodenschichten lassen sich Bauelemente mit größeren spezifischen Widerständen bei gleichzeitig verringerten Kapazitäten verwirklichen.

In Figur 7 ist eine alternative Ausführungsform zu Figur 6 zu sehen. Dabei kontaktieren die Kontaktflächen 10 und 15 jeweils nur eine Hauptoberfläche eines keramischen Teilbereichs, sind also auf der ersten und letzten Schicht des Schichtstapels angeordnet. Weisen die beiden Keramikteilbereiche 2 und 5 bei einer gegebenen Temperatur unterschiedliche spezifische Widerstände auf, so können mit Hilfe der in Figur 6 und Figur 7 gezeigten alternativen Ausführungsformen unterschiedliche Strompfade zwischen den beiden Kontaktschichten 10 und 15 definiert werden.

In Figur 8A ist ein Längsschnitt durch ein erfindungsgemäßes Bauelement gezeigt, das einen ersten Keramikteilbereich 2 und darauf befindlich einen zweiten Keramikteilbereich 5 umfaßt. Auf alle vier von den Kontaktflächen weitgehend freien Flächen des Grundkörpers ist eine Schutzschicht 65 angeordnet, die das Bauelement vor Umwelteinflüssen schützt, wie im Querschnitt in Fig. 8B zu sehen ist.

### Ausführungsbeispiel

Ein NTC-Bauelement, das wie in den Figuren 2A und 2B beschrieben, aufgebaut ist, ist gemäß der EIA Standardnorm hergestellt worden. Das Bauelement weist eine Länge von zirka 0,9 bis 4,8 mm, eine Breite von zirka 0,4 bis 6,8 mm und eine Höhe von zirka 0,6 bis 1,7 mm je nach Bautyp auf. Als elektrisch leitende Elektrodenschichten im Inneren des Grundkörpers werden dabei beispielsweise AgPd Elektroden verwendet. Ein Bauteil weist dabei z.B. einen ersten keramischen Teilbereich 2 mit einer Dicke von 100 µm auf, wobei sich auf den Oberflächen diesem Teilbereich der zweite keramische Teilbereich 5 mit einer Dicke von 390 µm befindet (siehe Fig. 2B). Ein solches Bauteil weist einen spezifischen Nennwiderstand R25 von 29.319 Ω und einen B-Wert von 3.779 K auf. Ein anderes Bauelement, mit gleicher Anordnung des ersten und zweiten keramischen Teilbereichs weist einen ersten keramischen Teilbereich mit einer Dicke von 800 µm und einen zweiten darauf befindlichen keramischen Teilbereich mit einer Dicke von 40 µm auf. Dieses Bauteil weist vom erstgenannten Bauteil unterschiedliche elektrische Eigenschaften auf, nämlich einen Nennwiderstand R25 von 11.270 Ω und einen B-Wert von 3.675 K. Wie im Querschnitt in Fig 2B zu sehen ist, bleibt der Gesamtquerschnitt aus den beiden keramischen Teilbereichen bei beiden Varianten des Bauelements gleich. Der erste keramische Teilbereich beider Bauelemente besteht dabei aus einem Nikkel-Mangan-Spinell, bei dem gemäß der bereits weiter oben aufgeführten allgemeinen Formel Mangan durch ein- bis dreiwertige Metalle ersetzt werden kann. Als Material für den zweiten keramischen Teilbereich wird ein Zink-Mangan-Spinell bei beiden Bauelementen verwendet.

Ein NTC-Bauelement wird gemäß der in den Figuren 5A und 5B gezeigten Anordnung aufgebaut. Dabei wird der Grundkörper des NTC-Bauelements aus einem Schichtstapel aufgebaut, der aus einem ersten und einem zweiten keramischen Teilbereich besteht, wobei der zweite keramische Teilbereich 5 die oberste und unterste Schicht des Schichtstapels bildet. Der zweite keramische Teilbereich besteht aus einem Zink-Mangan-Spinell, während der erste keramische Teilbereich aus dem bereits oben genannten Nickel-Mangan-Spinell

Ni^{II}_{1-z}[Mn^{III}₂Mn^{II}_{z}]O4,

bei dem gilt: 0,0 ≤ z ≤ 0,4.

Beträgt die Dicke des ersten keramischen Teilbereichs 2 60 µm und die Dicken der jeweiligen zweiten keramischen Teilbereiche 5 220 µm (Fig. 5B), so resultiert ein Bauelement mit einem Nennwiderstand R25 von 2.340.340 Ω und einem B-Wert von 4.126 K. Bei einem Bauelement mit gleichem Grundkörper, bei dem die Dicke des ersten keramischen Teilbereichs 90 µm und die jeweiligen Dicken der zweiten keramischen Teilbereiche 205 µm betragen, resultiert ein Nennwiderstand R25 von 676.100 Ω und ein B-Wert von 3.992 K.

Die Querschnitte beider Bauelemente in den Figuren 2B und 5C zeigen, daß die beiden miteinander verglichenen Bauelemente trotz unterschiedlicher Dicken der ersten und zweiten keramischen Teilbereiche insgesamt die gleiche Abmessung des Grundkörpers aufweisen. Beide Bauelemente zeigen somit besonders gut, daß durch Variation der Geometrie und der Menge der beiden Keramikteilbereiche im Grundkörper Bauelemente mit gleichen Abmessungen, aber unterschiedlichen elektrischen Eigenschaften hergestellt werden können.

Die Erfindung beschränkt sich nicht auf das hier gezeigte Ausführungsbeispiel. Weitere Variationen in der Erfindung sind vor allen Dingen im Bezug auf die relative Anordnung der keramischen Teilbereiche zueinander möglich, als auch im Bezug auf die verwendeten keramischen Heißleitermaterialien und die Anzahl der im Grundkörper verwendeten keramischen Teilbereiche.

### Bezugszeichenliste

- 1: Grundkörper
- 2: erster keramischer Teilbereich
- 5: zweiter keramischer Teilbereich
- 10: erste Kontaktschicht
- 15: zweite Kontaktschicht
- 25: elektrisch leitende Elektrodenschichten
- 26: weitere Elektrodenschichten, parallel zu den Elektrodenschichten 25
- 30, 35: Elektrodenbündel
- 40: zwischen den Elektrodenbündel angeordneter Bereich des Grundkörpers
- 45, 50: sich gegenüberliegende Stirnflächen des Grundkörpers
- 65: Schutzschicht

## Patentansprüche

1. Elektrisches Bauelement,
- mit einem Grundkörper (1), der zumindest einen ersten (2) und einen zweiten (5) jeweils räumlich ausgeformten keramischen Teilbereich aus unterschiedlichen Materialien umfaßt,
- wobei die Materialien des ersten und zweiten keramischen Teilbereichs jeweils NTC-Keramiken sind, die einen Widerstand mit einem negativen Temperaturkoeffizienten aufweisen,
- bei dem wenigstens eine erste (10) und eine zweite (15) Kontaktschicht auf der Oberfläche des Grundkörpers vorgesehen sind,
- wobei beide keramischen Teilbereiche zwischen der ersten und zweiten Kontaktschicht angeordnet sind, und
- bei dem im Grundkörper (1) mehrere mit Abstand angeordnete, elektrisch leitende Elektrodenschichten (25) vorhanden sind, die jeweils mit einer der Kontaktschichten (10,15) elektrisch leitend verbunden sind, wobei zwei Elektrodenstapel (30,35) gebildet werden, die jeweils eine Kontaktschicht kontaktieren.

2. Elektrisches Bauelement nach dem vorhergehenden Anspruch,
- bei dem der zweite keramische Teilbereich auf den Oberflächen des ersten keramischen Teilbereichs angeordnet ist.

3. Elektrisches Bauelement nach einem der vorherigen Ansprüche,
- bei dem der erste (2) und der zweite (5) keramische Teilbereich jeweils als Schichten ausgeformt sind.

4. Bauelement nach einem der vorherigen Ansprüche,
- bei dem die Materialien des ersten und zweiten keramischen Teilbereichs unterschiedliche Dielektrizitätskonstanten aufweisen.

5. Bauelement nach einem der vorherigen Ansprüche,
- bei dem die Materialien des ersten und zweiten keramischen Teilbereichs unterschiedliche elektrische Widerstands-Temperatur-Kennlinienverläufe aufweisen.

6. Bauelement nach einem der vorherigen Ansprüche,
- bei dem die Materialien des ersten und zweiten keramischen Teilbereichs bei einer gegebenen Temperatur unterschiedliche elektrische Widerstände aufweisen.

7. Bauelement nach einem der vorherigen Ansprüche,
- bei dem die zwei Kontaktschichten auf sich gegenüberliegenden Stirnflächen des Grundkörpers angeordnet sind, so daß sich Elektrodenschichten (25), die Bestandteil von jeweils einem der Elektrodenstapel (30,35) sind, gegenüberliegen,
- bei dem parallel zu zwei sich gegenüberliegenden Elektrodenschichten, eine weitere Elektrodenschicht (26) angeordnet ist.

8. Bauelement nach einem der vorherigen Ansprüche,
- bei dem zwischen den zwei Elektrodenstapeln (30,35) ein Bereich (40) des Grundkörpers vorhanden ist.

9. Bauelement nach einem der vorherigen Ansprüche,
- bei dem die Elektrodenschichten (25) überlappend angeordnet sind und alternierend mit jeweils einer der Kontaktschichten (10,15) verbunden sind, so daß die zwei Elektrodenstapel (30,35) kammartig ineinander geschoben sind.

10. Bauelement nach einem der vorherigen Ansprüche,
- bei dem die Elektrodenschichten (25) nur im ersten keramischen Teilbereich (2) angeordnet sind.

11. Bauelement nach einem der vorherigen Ansprüche,
- bei dem die zwei Kontaktschichten auf sich einander gegenüberliegenden Flächen (45,50) des Grundkörpers (1) angeordnet sind,
- bei dem der erste (2) und der zweite (5) keramische Teilbereich jeweils als Schichten ausgeformt sind,
- bei dem der Grundkörper eine alternierende Abfolge von wenigstens jeweils einem ersten und einem zweiten keramischen Teilbereich umfaßt, wobei die Kontaktschichten auf den Stirnflächen der Teilbereiche angeordnet sind.

12. Bauelement nach dem vorhergehenden Anspruch,
- bei dem im Grundkörper (1) elektrisch leitende Elektrodenschichten (25) parallel zu den alternierenden Schichten der beiden keramischen Teilbereiche angeordnet sind.

13. Bauelement nach einem der Ansprüche 1 und 3 bis 6,
- bei dem die zwei Kontaktschichten auf sich gegenüberliegenden Flächen (45,50) des Grundkörpers (1) angeordnet sind,
- bei dem der erste (2) und der zweite (5) keramische Teilbereich jeweils als Schichten ausgeformt sind, so daß ein Schichtstapel gebildet wird,
- wobei die Kontaktschichten auf der obersten und der untersten Schicht des Schichtstapels angeordnet sind.

14. Bauelement nach einem der vorherigen Ansprüche,
- bei dem zumindest ein Material des ersten oder zweiten keramischen Teilbereichs einen Nickel-Mangan-Spinell mit einer der folgenden allgemeinen Formeln umfaßt:
a)
(A^{III}_{z},A^{II}_{(3/2) z},A^{I}_{3z}) [Ni^{II}Mn^{III}_{2-z}]O₄,
bei der das dreiwertige Metall A^{III} Eisen, Titan, Aluminium oder Zirkon, das zweiwertige Metall A^{II} Cobalt, Zink, Eisen, Calcium, Magnesium, Zirkon oder Kupfer ist und das einwertige Metall A^{I} Lithium ist, wobei gilt: 0,01 ≤ z ≤ 0,6, oder
b)
Ni^{II}_{1-z}[Mn^{III}₂Mn^{II}_{z}]O₄,
bei dem gilt: 0,0 ≤ z ≤ 0,4,
- oder bei dem zumindest ein Material des ersten oder zweiten keramischen Teilbereichs einen Mangan-Spinell mit der folgenden allgemeinen Formel umfasst:
c)
(A^{III}_{(2/3)z},A^{II}_{z},A^{I}_{2z}) [Mn^{III}₂Mn^{II}_{1-z}]O₄,
wobei gilt 0,01 ≤ z ≤ 0,6.

15. Bauelement nach dem vorherigen Anspruch,
- bei dem der Spinell mit einem Metall dotiert ist, das aus folgender Gruppe ausgewählt ist:
a) Titan
b) Aluminium
c) Calcium
d) Zirkon
e) Magnesium.

16. Bauelement nach Anspruch 14,
- bei dem das erste Keramikmaterial einen Nickel-Mangan-Spinell (NiMn₂O₄) und das zweite Keramikmaterial einen Zink-Mangan-Spinell (ZnMn₂O₄) umfaßt.

17. Bauelement nach einem der Ansprüche 1 bis 15,
- bei dem zumindest eines der beiden Keramikmaterialien eine Perovskitkeramik der folgenden allgemeinen Formel umfaßt:
ABO₃,
bei der das Metall A entweder ein Element der seltenen Erden, Strontium oder Barium ist und das Metall B Magnesium, Titan, Vanadium, Chrom, Aluminium, Mangan, Eisen, Cobalt oder Nickel ist.

18. Bauelement nach einem der vorhergehenden Ansprüche,
- bei dem auf zumindest zwei sich gegenüberliegenden Oberflächen (40,45) des Grundkörpers (1), die zum größten Teil frei von den beiden Kontaktflächen (10,15) sind, eine Schutzschicht (65) angeordnet ist.

19. Bauelement nach dem vorherigen Anspruch,
- bei dem die Schutzschicht (65) ein Material mit einem hohen spezifischen elektrischen Widerstand von größer 10⁶ Ωcm umfaßt.

20. Bauelement nach dem vorherigen Anspruch,
- bei dem die Schutzschicht Glas, Keramiken, Silazane oder Parylene umfaßt.

## Claims

1. Electrical component,
- comprising a basic body (1) comprising at least one first (2) and one second (5) in each case spatially shaped ceramic partial region composed of different materials,
- the materials of the first and second ceramic partial region in each case being NTC ceramics having a resistance with a negative temperature coefficient,
- in which at least one first (10) and one second (15) contact layer are provided on the surface of the basic body,
- both ceramic partial regions being arranged between the first and second contact layer, and
- in which a plurality of electrically conductive electrode layers (25) arranged at a distance are present in the basic body (1), said electrode layers in each case being electrically conductively connected to one of the contact layers (10, 15) and forming two electrode stacks (30, 35) which make contact in each case with a contact layer.

2. Electrical component according to the preceding claim,
- in which the second ceramic partial region is arranged on the surfaces of the first ceramic partial region.

3. Electrical component according to one of the preceding claims,
- in which the first (2) and the second (5) ceramic partial region are in each case formed as layers.

4. Component according to one of the preceding claims,
- in which the materials of the first and second ceramic partial region have different dielectric constants.

5. Component according to one of the preceding claims,
- in which the materials of the first and second ceramic partial region have different electrical resistance-temperature characteristic curve profiles.

6. Component according to one of the preceding claims,
- in which the materials of the first and second ceramic partial region have different electrical resistances at a given temperature.

7. Component according to one of the preceding claims,
- in which the two contact layers are arranged on mutually opposite end faces of the basic body, such that electrode layers (25) which are part of in each case one of the electrode stacks (30, 35) are situated opposite one another,
- in which a further electrode layer (26) is arranged parallel to two electrode layers being situated opposite one another.

8. Component according to one of the preceding claims,
- in which a region (40) of the basic body is present between the two electrode stacks (30, 35).

9. Component according to one of the preceding claims,
- in which the electrode layers (25) are arranged in overlapping fashion and are alternately connected to in each case one of the contact layers (10, 15), such that the two electrode stacks (30, 35) are telescoped in a comblike manner.

10. Component according to one of the preceding claims,
- in which the electrode layers (25) are arranged only in the first ceramic partial region (2).

11. Component according to one of the preceding claims,
- in which the two contact layers are arranged on mutually opposite faces (45, 50) of the basic body (1),
- in which the first (2) and the second (5) ceramic partial region are in each case shaped as layers,
- in which the basic body comprises an alternate sequence of at least in each case one first and one second ceramic partial region, the contact layers being arranged on the end faces of the partial regions.

12. Component according to the preceding claim,
- in which in the basic body (1) electrically conductive electrode layers (25) are arranged parallel to the alternate layers of the two ceramic partial regions.

13. Component according to one of Claims 1 and 3 to 6,
- in which the two contact layers are arranged on mutually opposite faces (45, 50) of the basic body (1),
- in which the first (2) and the second (5) ceramic partial region are in each case shaped as layers, such that a layer stack is formed,
- the contact layers being arranged on the topmost and the bottommost layer of the layer stack.

14. Component according to one of the preceding claims,
- in which at least one material of the first or second ceramic partial region comprises a nickel-manganese spinel having one of the following general formulae:
a)
(A^{III}_{z},A^{II}_{(3/2)z},A^{I}_{3z}) [Ni^{II}Mn^{III}_{2-z}]O₄,
in which the trivalent metal A^{III} is iron, titanium, aluminium or zirconium, the divalent metal A^{II} is cobalt, zinc, iron, calcium, magnesium, zirconium or copper, and the monovalent metal A^{I} is lithium, where the following holds true: 0.01 ≤ z ≤ 0.6, or
b)
Ni^{II}_{1-z}[Mn^{III}₂Mn^{II}_{Z}]O₄,
in which the following holds true: 0.0 ≤ z ≤ 0.4, - or in which at least one material of the first or second ceramic partial region comprises a manganese spinel having the following general formula:
c)
(A^{III}_{(2/3)z},A^{II}_{z},A^{I}_{2z}) [Mn^{III}₂Mn^{II}_{1-z}]O₄,
where 0.01 ≤ z ≤ 0.6 holds true.

15. Component according to the preceding claim,
- in which the spinel is doped with a metal selected from the following group:
a) titanium
b) aluminium
c) calcium
d) zirconium
e) magnesium.

16. Component according to Claim 14,
- in which the first ceramic material comprises a nickel-manganese spinel (NiMn₂O₄) and the second ceramic material comprises a zinc-manganese spinel (ZnMn₂O₄) .

17. Component according to one of Claims 1 to 15,
- in which at least one of the two ceramic materials comprises a perovskite ceramic having the following general formula:
ABO₃,
in which the metal A is either a rare earth element, strontium or barium and the metal B is magnesium, titanium, vanadium, chromium, aluminium, manganese, iron, cobalt or nickel.

18. Component according to one of the preceding claims,
- in which a protective layer (65) is arranged on at least two mutually opposite surfaces (40, 45) of the basic body (1) which are for the most part free of the two contact areas (10, 15).

19. Component according to the preceding claim,
- in which the protective layer (65) comprises a material having a high electrical resistivity of greater than 10⁶ Ωcm.

20. Component according to the preceding claim,
- in which the protective layer comprises glass, ceramics, silazanes or parylenes.

## Revendications

1. Composant électrique,
- ayant un corps de base (1), qui comprend au moins une première (2) et une deuxième (5) sous-partie céramique en matériaux différents formées dans l'espace,
- les matériaux de la première et de la deuxième sous-partie en céramique étant respectivement des céramiques CTN, qui ont une résistance ayant un coefficient de température négatif,
- dans lequel au moins une première (10) et une deuxième (15) couche de contact sont prévues à la surface du corps de base,
- dans lequel les deux sous-parties en céramique sont disposées entre la première et la deuxième couche de contact et
- dans lequel il est prévu dans le corps de base (1) plusieurs couches (25) d'électrodes conductrices de l'électricité et à distance les unes des autres, qui sont reliées d'une manière conductrice de l'électricité respectivement à l'une des couches (10, 15) de contact avec formation de deux piles (30, 35) d'électrodes qui sont en contact respectivement avec une couche de contact.

2. Composant électrique suivant la revendication précédente,
- dans lequel la deuxième sous-partie en céramique est disposée aux surfaces de la première sous-partie en céramique.

3. Composant électrique suivant l'une des revendications précédentes,
- dans lequel la première (2) et la deuxième (5) sous-partie en céramique sont formées respectivement sous la forme de couches.

4. Composant suivant l'une des revendications précédentes,
- dans lequel les matériaux de la première et de la deuxième sous-partie en céramique ont des constantes diélectriques différentes.

5. Composant suivant l'une des revendications précédentes,
- dans lequel les matériaux de la première et de la deuxième sous-partie en céramique ont des courbes caractéristiques résistance électrique-température qui sont différentes.

6. Composant suivant l'une des revendications précédentes,
- dans lequel les matériaux de la première et de la deuxième sous-partie en céramique ont des résistances électriques différentes à une température donnée.

7. Composant suivant l'une des revendications précédentes,
- dans lequel les deux couches de contact sont disposées sur des surfaces frontales opposées du corps de base, de sorte que les couches (25) d'électrodes qui font partie de respectivement l'une des piles (30, 35) d'électrodes sont opposées,
- dans lequel une autre couche (26) d'électrodes est disposée parallèlement à deux couches d'électrodes opposées.

8. Composant suivant l'une des revendications précédentes,
- dans lequel il y a une partie (40) du corps de base entre les deux piles (30, 35) d'électrodes.

9. Composant suivant l'une des revendications précédentes,
- dans lequel les couches (25) d'électrodes sont superposées et sont reliées en alternance avec respectivement l'une des couches (10, 15) de contact, de sorte que les deux piles (30, 35) d'électrodes sont interdigitées à la manière d'un peigne.

10. Composant suivant l'une des revendications précédentes,
- dans lequel les couches (25) d'électrodes ne sont disposées que dans la première sous-partie (22) en céramique.

11. Composant suivant l'une des revendications précédentes,
- dans lequel les deux couches de contact sont disposées sur des surfaces (45, 50) du corps de base (1) opposées l'une à l'autre,
- dans lequel la première (2) et la deuxième (5) sous-partie en céramique sont sous la forme respective de couches,
- dans lequel le corps de base comprend une succession en alternance d'au moins respectivement une première et une deuxième sous-partie en céramique, les couches de contact étant disposées sur les surfaces frontales des sous-parties.

12. Composant suivant la revendication précédente,
- dans lequel dans le corps de base (1) des couches (25) d'électrodes conductrices de l'électricité sont disposées parallèlement aux couches en alternance des deux sous-parties en céramique.

13. Composant suivant l'une des revendications 1 et 3 à 6,
- dans lequel les deux couches de contact sont disposées sur des faces (45, 50) opposées du corps de base (1),
- dans lequel la première (2) et la deuxième (5) sous-partie en céramique sont formées respectivement sous la forme de couches, de manière à former une pile de couches,
- dans lequel les couches de contact sont disposées sur la couche la plus haute et la plus basse de la pile de couches.

14. Composant suivant l'une des revendications précédentes,
- dans lequel au moins un matériau de la première ou de la deuxième sous-partie en céramique comprend un spinelle de nickel-manganèse ayant l'une des formules générales suivantes :
a)
(A^{III}_{z},A^{II}_{(3/2)z},A^{I}_{3z}) [Ni^{II}Mn^{III}_{2-z}]O₄,
dans laquelle le métal A^{III} trivalent est le fer, le titane, l'aluminium ou le zirconium, le métal A^{II} divalent est le cobalt, le zinc, le fer, le calcium, le magnésium, le zirconium ou le cuivre et le métal A^{I} monovalent est le lithium, en ayant :
0,01 ≤ z ≤ 0,6 ou
b)
Ni^{II}_{1-z}[Mn^{III}₂Mn^{II}_{z}]O₄,
dans laquelle : 0,0 ≤ z ≤ 0,4,
- ou dans lequel le au moins un matériau de la première ou de la deuxième sous-partie en céramique comprend un spinelle de manganèse ayant la formule générale suivante :
c)
(A^{III}_{(2/3)z},A^{II}_{z},A^{I}_{2z}) [Mn^{III}₂Mn^{II}_{1-z}]O₄,
en ayant 0,01 ≤ z ≤ 0,6.

15. Composant suivant la revendication précédente,
- dans lequel le spinelle est dopé par un métal choisi dans le groupe suivant :
a) titane
b) aluminium
c) calcium
d) zirconium
e) magnésium.

16. Composant suivant la revendication 14,
- dans lequel le premier matériau en céramique comprend un spinelle nickel-manganèse (NiMn₂O₄) et le deuxième matériau en céramique un spinelle zinc-manganèse (ZnMn₂O₄).

17. Composant suivant l'une des revendications 1 à 15,
- dans lequel au moins l'un des deux matériaux en céramique comprend une céramique de perovskite ayant la formule générale suivante :
ABO₃,
dans laquelle le métal A est un élément des terres rares, le strontium ou le baryum et le métal B est le magnésium, le titane, le vanadium, le chrome, l'aluminium, le manganèse, le fer, le cobalt ou nickel.

18. Composant suivant l'une des revendications précédentes,
- dans lequel une couche (65) de protection est disposée sur au moins deux surfaces (40, 45) opposées du corps de base (1) qui sont, pour la plus grande partie, dégagées des deux surfaces (10, 15) de contact.

19. Composant suivant la revendication précédente,
- dans lequel la couche (65) de protection comprend un matériau ayant une grande résistance électrique spécifique supérieure à 10⁶ Ω cm.

20. Composant suivant la revendication précédente,
- dans lequel la couche de protection comprend du verre, des céramiques, des silazanes ou des parylènes.
